# EUROPEAN PATENT APPLICATION

(11) **EP 4 671 256 A1**
(43) Date of publication of application: **31.12.2025**
(21) Application number: 24780409.9
(22) Date of filing: 27.03.2024
(51) Int. Cl.: C07F 9/09, C08G 18/10, C08G 18/28, C08G 18/38, C08G 18/71, G02B 1/04, G02C 7/02

(54) **COMPOUND, MOLD RELEASE AGENT, ISOCYANATE COMPOSITION, POLYMERIZABLE COMPOSITION, RESIN, OPTICAL MATERIAL, SPECTACLE LENS, METHOD FOR PRODUCING RESIN, AND METHOD FOR PRODUCING SPECTACLE LENS**

(30) Priority: 31.03.2023 JP 2023058541
(71) Applicant: Hoya Lens Thailand Ltd., Pathumthani 12130 (TH)
(72) Inventor: KOUSAKA, Masahisa, Tokyo 160-8347 (JP); OHNISHI, Tomofumi, Tokyo 160-8347 (JP)
(74) Representative: Kraus & Lederer PartGmbB
(86) International application number: PCT/JP2024/012164
(87) International publication number: WO 2024/204303

(57) **Abstract**

One embodiment of the present disclosure relates to a compound represented by Formula (1), a mold release agent containing the compound, an isocyanate composition, a polymerizable composition, a resin, an optical material, a spectacle lens, a method of producing a resin, and a method of producing a spectacle lens

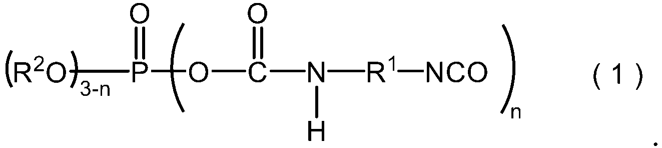

## Description

### [Technical Field]

The present disclosure relates to a compound, a mold release agent, an isocyanate composition, a polymerizable composition, a resin, an optical material, a spectacle lens, method of producing a resin, and a method of producing a spectacle lens.

### [Background Art]

Plastic spectacle lenses are widely known in the related art. A polythiourethane resin is used as a material for spectacle lenses (for example, PTL 1). Since the polythiourethane resin is a material having an appropriate refractive index, it allows a spectacle lens to have an appropriate thickness, and easily secures processability and impact resistance, and is widely used.

### [Citation List]

### [Patent Literature]

[PTL 1] Japanese Patent Application Publication No. 2004-002820

### [Summary of Invention]

### [Technical Problem]

Plastic spectacle lenses are generally produced by filling a polymerizable composition into a mold and thermally polymerizing it. A mold release agent is added to the polymerizable composition in order to release the spectacle lens from the mold after polymerization.

One embodiment of the present disclosure relates to a compound exhibiting excellent properties as a mold release agent, a mold release agent containing the compound, an isocyanate composition, a polymerizable composition, a resin, an optical material, a spectacle lens, a method of producing a resin, and a method of producing a spectacle lens.

### [Solution to Problem]

One embodiment of the present disclosure relates to a compound represented by Formula (1): 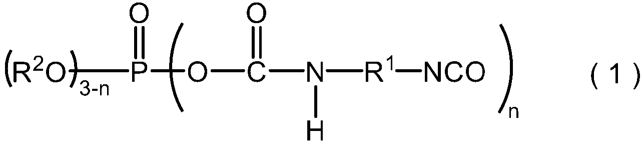 (in the formula,
R¹ is
a linear alkylene group having 1 to 20 carbon atoms or
a group represented by Formula (a-1), Formula (a-2), Formula (a-3), Formula (a-4) or Formula (a-5): 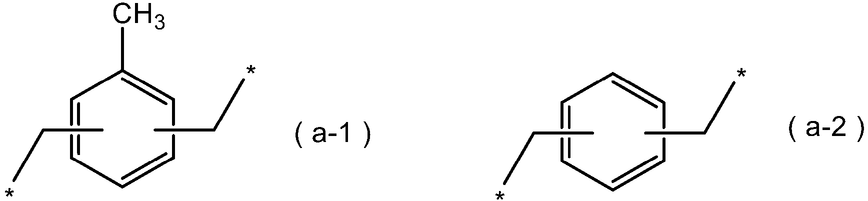 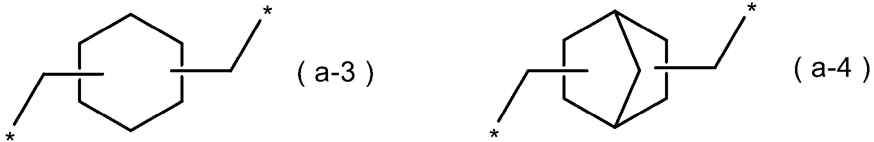 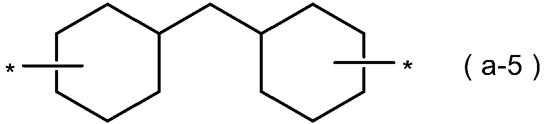
(in the formula, * is a binding site),
R²'s are each independently an aliphatic hydrocarbon group having 1 to 12 carbon atoms or an aromatic hydrocarbon group having 6 to 20 carbon atoms in which some methylene moieties are optionally substituted with an oxygen atom, and
n is 1 or 2).

One embodiment of the present disclosure relates to a mold release agent containing the above compound.

One embodiment of the present disclosure relates to use of the above compound as a mold release agent.

One embodiment of the present disclosure relates to an isocyanate composition containing
a compound represented by Formula (1), and
an isocyanate component containing a compound represented by Formula (2):

   OCN-R¹-NCO (2)
(in the formula,
R¹ is
a linear alkylene group having 1 to 20 carbon atoms or
a group represented by Formula (a-1), Formula (a-2), Formula (a-3), Formula (a-4) or Formula (a-5)).

One embodiment of the present disclosure relates to a polymerizable composition containing the above isocyanate composition and an active hydrogen compound component.

One embodiment of the present disclosure relates to a resin which is a cured product of the above polymerizable composition.

One embodiment of the present disclosure relates to an optical material containing the above resin.

One embodiment of the present disclosure relates to a spectacle lens containing the above resin.

One embodiment of the present disclosure relates to a method of producing a resin, including
a step of mixing an isocyanate component containing a compound represented by Formula (2) and
a compound represented by Formula (3): 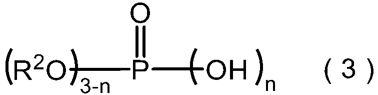
(in the formula,
R²'s are each independently an aliphatic hydrocarbon group having 1 to 12 carbon atoms or an aromatic hydrocarbon group having 6 to 20 carbon atoms in which some methylene moieties are optionally substituted with an oxygen atom, and n is 1 or 2)
at a temperature of 0°C to 10°C,
a step of mixing the mixture obtained in the mixing step with an active hydrogen component while maintaining the temperature at 0°C to 10°C to obtain a polymerizable composition, and
a step of polymerizing the polymerizable composition.

One embodiment of the present disclosure relates to a method of producing a spectacle lens according to claim 11, including
a step of mixing an isocyanate component containing a compound represented by Formula (2) and a compound represented by Formula (3) at a temperature of 0°C to 10°C,
a step of mixing the mixture obtained in the mixing step with an active hydrogen component while maintaining the temperature at 0°C to 10°C to obtain a polymerizable composition, and
a step of polymerizing the polymerizable composition,
wherein the polymerization step is performed by filling a molding die with the polymerizable composition.

### [Advantageous Effects of Invention]

One embodiment of the present disclosure provides a compound exhibiting excellent properties as a mold release agent, a mold release agent containing the compound, an isocyanate composition, a polymerizable composition, a resin, an optical material, a spectacle lens, a method of producing a resin, and a method of producing a spectacle lens.

### [Brief Description of Drawings]

[Fig. 1]

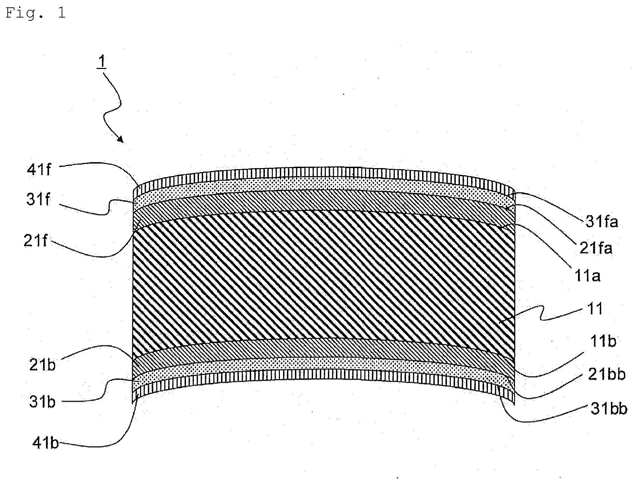

Fig. 1 is a schematic cross-sectional view of a spectacle lens 1 according to the present embodiment.

### [Description of Embodiments]

Hereinafter, embodiments according to the present disclosure will be described in detail with reference to the drawings as necessary, but the present disclosure is not limited thereto, and can be variously modified without departing from the scope and spirit thereof. Here, in the drawings, the same components are denoted with the same reference numerals and redundant descriptions are omitted. In addition, positional relationships such as above, below, left and right are based on the positional relationships shown in the drawings unless otherwise specified. In addition, dimensional ratios in the drawings are not limited to the illustrated ratios.

Here, in this specification, for example, the expression of a numerical value range of "1 to 100" includes both the lower limit value "1" and the upper limit value "100." In addition, the same applies to the expression of other numerical value ranges.

### [Compound]

A compound according to the present embodiment (hereinafter compounds corresponding to Formula (1) are collectively referred to as "Compound 1") is represented by Formula (1): 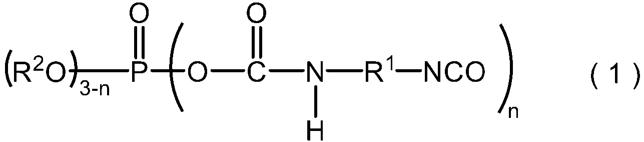 (in the formula,
R¹ is
a linear alkylene group having 1 to 20 carbon atoms or
a group represented by Formula (a-1), Formula (a-2), Formula (a-3), Formula (a-4) or Formula (a-5): 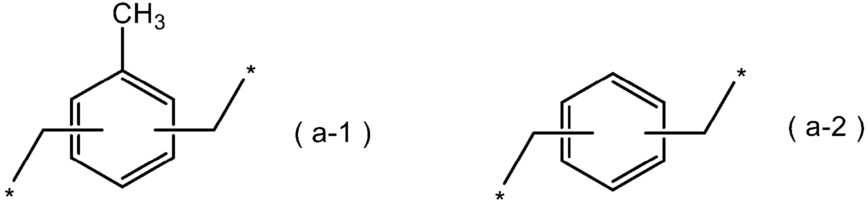 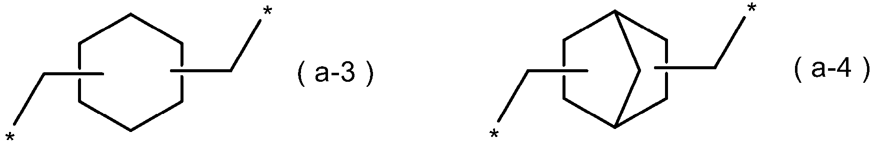 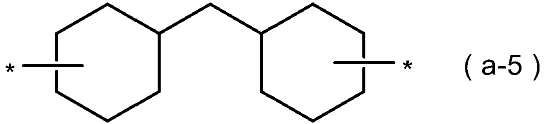
(in the formula, * is a binding site),
R²'s are each independently an aliphatic hydrocarbon group having 1 to 12 carbon atoms or an aromatic hydrocarbon group having 6 to 20 carbon atoms in which some methylene moieties are optionally substituted with an oxygen atom, and
n is 1 or 2). One embodiment of the present disclosure exhibits excellent properties as a mold release agent. Particularly, in the production of molded products using resins such as polythiourethane and polyurethane, when used as a mold release agent together with these resin monomers during molding polymerization, the compound exhibits excellent properties as a mold release agent.

Examples of linear alkylene groups having 1 to 20 carbon atoms for R¹ include a tetramethylene group, a pentamethylene group, a hexamethylene group, and a heptamethylene group.

The aliphatic hydrocarbon group having 1 to 12 carbon atoms in which some methylene moieties are optionally substituted with an oxygen atom for R² may be a group represented by Formula (b1)=R^{b1}-(OCH₂)_{b}-* (in the formula, Rb1 is an aliphatic hydrocarbon group having 1 to 6 carbon atoms, and b is 0 to 5).

Examples of aromatic hydrocarbon groups having 6 to 20 carbon atoms for R² include a phenyl group, a tolyl group, and a naphthyl group.
n is 1 or 2.

Specific examples of Compound 1 include compounds represented by the following Formula (1-1) to Formula (1-40). These compounds may be used alone or two or more thereof may be used in combination.

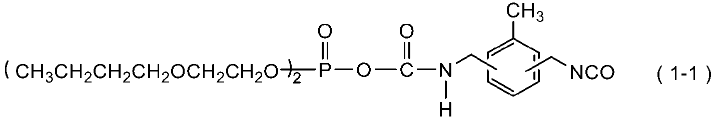

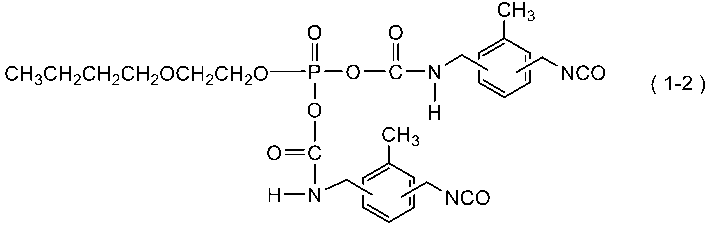

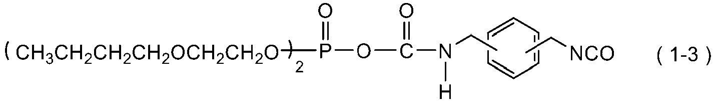

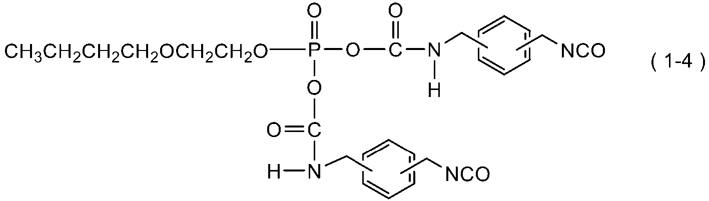

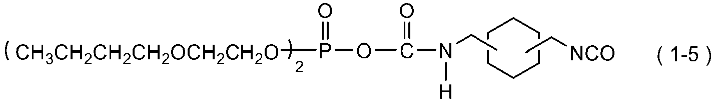

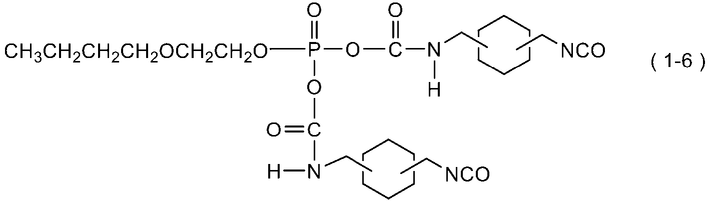

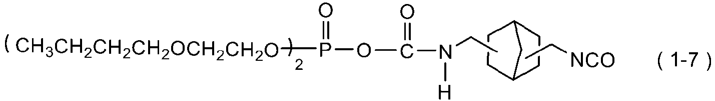

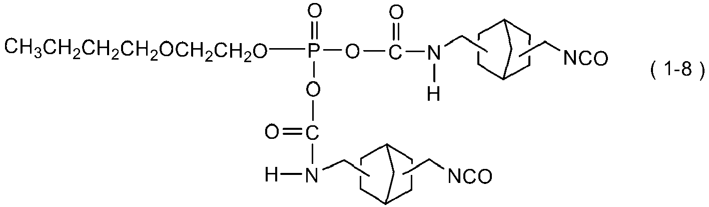

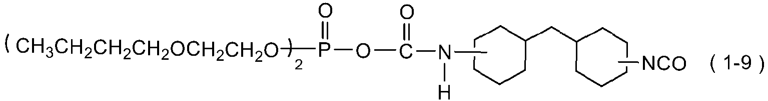

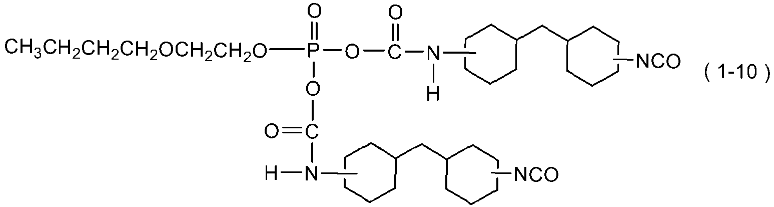

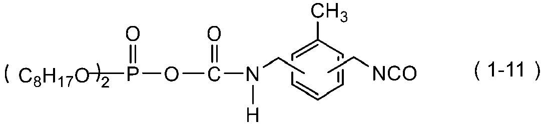

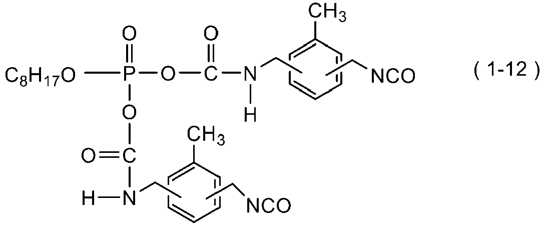

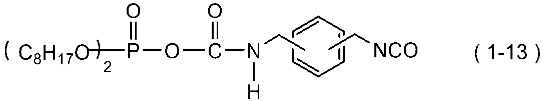

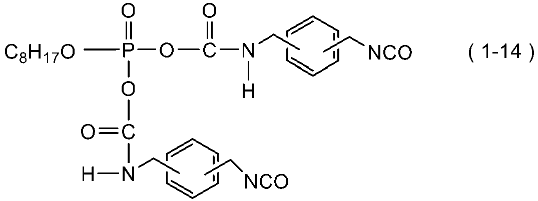

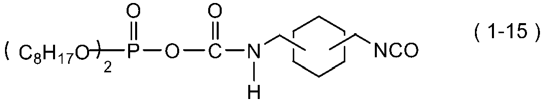

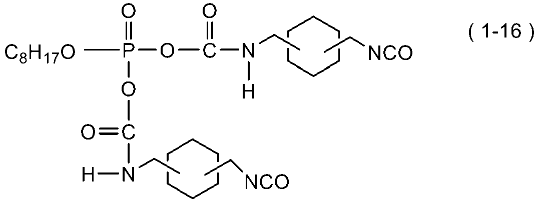

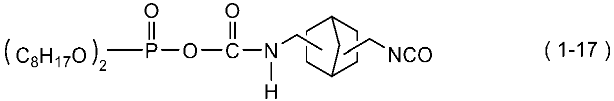

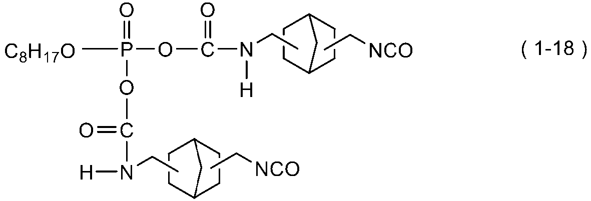

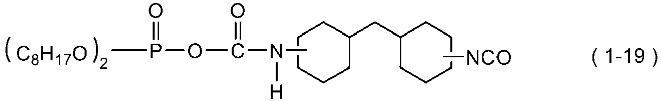

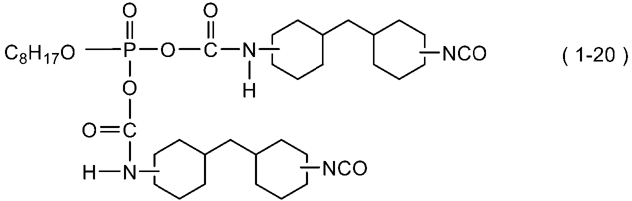

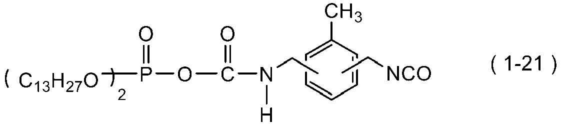

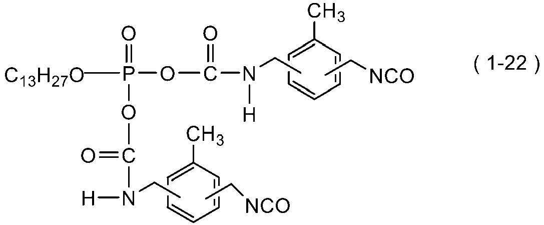

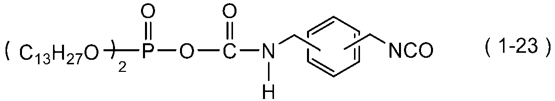

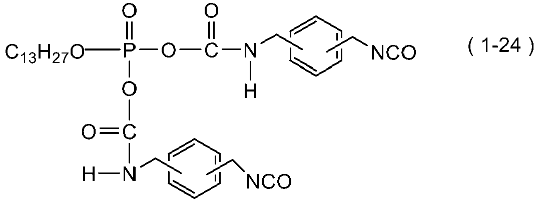

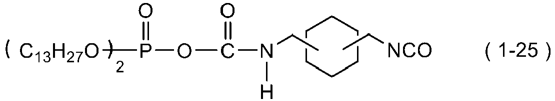

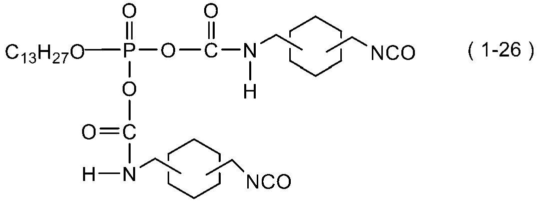

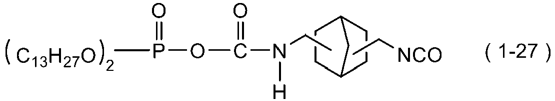

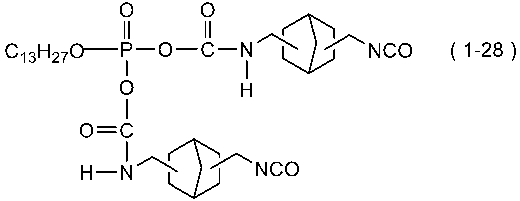

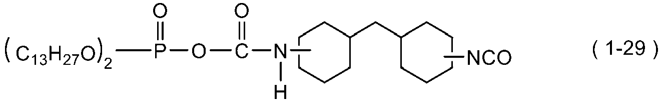

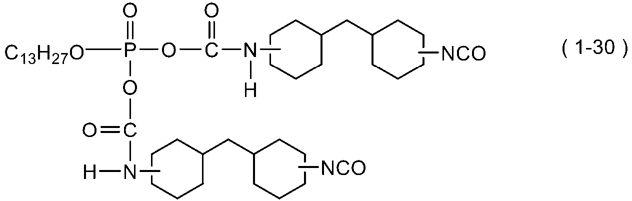

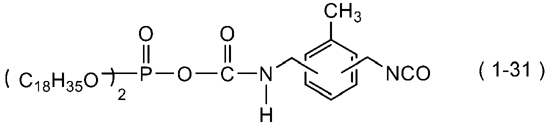

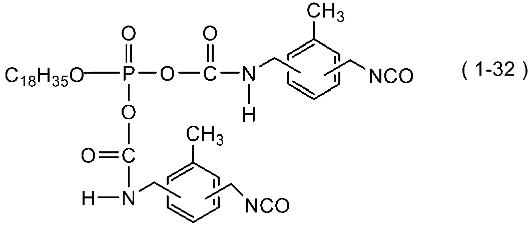

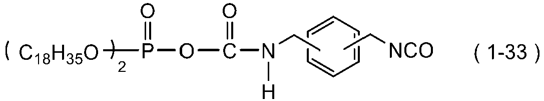

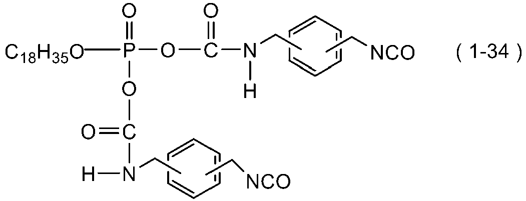

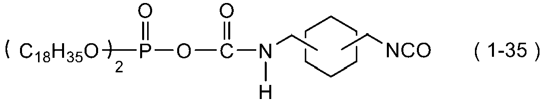

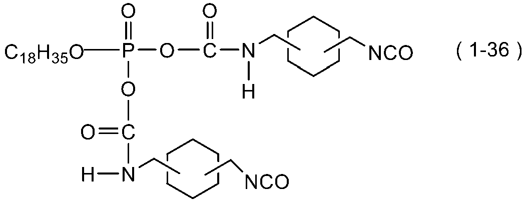

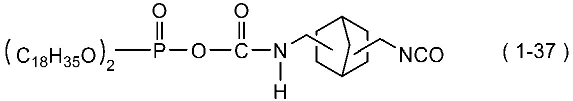

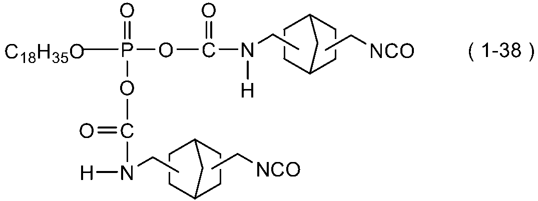

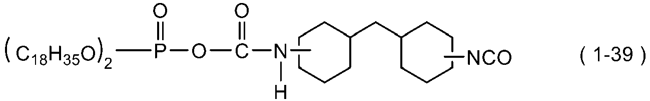

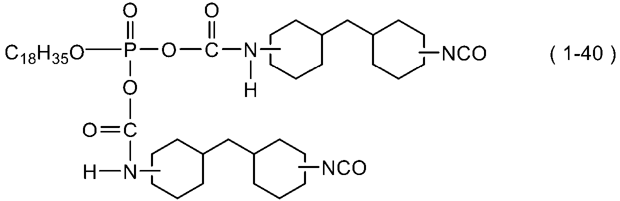

Compound 1 can be produced by mixing predetermined compounds under predetermined conditions, for example, as shown in a method of producing a resin according to the present embodiment to be described below.

As described above, Compound 1 can be used as a mold release agent. Compound 1 can be used as a mold release agent.

### [Isocyanate Composition]

An isocyanate composition according to the present embodiment contains
a compound represented by Formula (1) and an isocyanate component containing a compound represented by Formula (2):

   OCN-R¹-NCO (2)
(in the formula, R¹ is the same as defined in Formula (1)). The isocyanate composition according to the present embodiment exhibits a release effect when it is mixed with a thiol component and the mixture is polymerized in a molding die.

In the isocyanate composition according to the present embodiment, in the compound represented by Formula (1) and the compound represented by Formula (2), R¹'s are preferably the same group.

Examples of compounds represented by Formula (2) include polyisocyanate compounds having an aromatic ring, polyisocyanate compounds having an aliphatic ring, and linear or branched aliphatic polyisocyanate compounds.

Examples of polyisocyanate compounds having an aromatic ring include diisocyanatobenzene, 2,4-tolylene diisocyanate, 2,6-tolylene diisocyanate, ethyl phenylene diisocyanate, isopropyl phenylene diisocyanate, diethyl phenylene diisocyanate, diethyl phenylene diisocyanate, diisopropyl phenylene diisocyanate, trimethylbenzene triisocyanate, benzene triisocyanate, biphenyl diisocyanate, 4,4'-diphenylmethane diisocyanate, 4,4'-methylenebis(2-methylphenylisocyanate), bibenzyl-4,4'-diisocyanate, bis(isocyanatophenyl)ethylene, 1,3-bis(isocyanatomethyl)benzene, 1,4-bis(isocyanatomethyl)benzene, 1,3-bis(isocyanatoethyl)benzene, bis(isocyanatopropyl)benzene, α,α,α',α'-tetramethylxylylene diisocyanate, bis(isocyanatobutyl)benzene, bis(isocyanatomethyl)naphthalene, bis(isocyanatomethylphenyl)ether, 2-isocyanatophenyl-4-isocyanatophenyl sulfide, bis(4-isocyanatophenyl)sulfide, bis(4-isocyanatomethylphenyl)sulfide, bis(4-isocyanatophenyl)disulfide, bis(2-methyl-5-isocyanatophenyl)disulfide, bis(3-methyl-5-isocyanatophenyl)disulfide, bis(3-methyl-6-isocyanatophenyl)disulfide, bis(4-methyl-5-isocyanatophenyl)disulfide, bis(3-methyloxy-4-isocyanatophenyl)disulfide, and bis(4-methyloxy-3-isocyanatophenyl)disulfide.

Examples of polyisocyanate compounds having an aliphatic ring include 1,3-diisocyanatocyclohexane, 1,4-diisocyanatocyclohexane, isophorone diisocyanate, 1,3-bis(isocyanatomethyl)cyclohexane, 1,4-bis(isocyanatomethyl)cyclohexane, dicyclohexylmethane-4,4'-diisocyanate, dicyclohexylmethane-2,4'-diisocyanate, 2,5-bis(isocyanatomethyl)-bicyclo[2.2.1]heptane, 2,6-bis(isocyanatomethyl)-bicyclo[2.2.1]heptane, 2,5-diisocyanato-1,4-dithiane, 2,5-bis(isocyanatomethyl)-1,4-dithiane, 4,5-diisocyanato-1,3-dithiolane, 4,5-bis(isocyanatomethyl)-1,3-dithiolane, and 4,5-bis(isocyanatomethyl)-2-methyl-1,3-dithiolane.

Examples of linear or branched aliphatic polyisocyanate compounds include pentamethylene diisocyanate, hexamethylene diisocyanate, 2,2-dimethylpentane diisocyanate, 2,2,4-trimethylhexane diisocyanate, butene diisocyanate, 1,3-butadiene-1,4-diisocyanate, 2,4,4-trimethylhexamethylene diisocyanate, 1,6,11-undecane triisocyanate, 1,3,6-hexamethylenetriisocyanate, 1,8-diisocyanato-4-isocyanatomethyloctane, bis(isocyanatoethyl)carbonate, bis(isocyanatoethyl)ether, lysine diisocyanatomethyl ester, lysine triisocyanate, bis(isocyanatomethyl)sulfide, bis(isocyanatoethyl)sulfide, bis(isocyanatopropyl)sulfide, bis(isocyanatohexyl)sulfide, bis(isocyanatomethyl)sulfone, bis(isocyanatomethyl)disulfide, bis(isocyanatoethyl)disulfide, bis(isocyanatopropyl)disulfide, bis(isocyanatomethylthio)methane, bis(isocyanatoethylthio)methane, bis(isocyanatomethylthio)ethane, bis(isocyanatoethylthio)ethane, 1,5-diisocyanato-2-isocyanatomethyl-3-pentane, 1,2,3-tris(isocyanatomethylthio)propane, 1,2,3-tris(isocyanatoethylthio)propane, 3,5-dithia-1,2,6,7-heptanetetraisocyanate, 2,6-diisocyanatomethyl-3,5-dithia-1,7-heptane diisocyanate, 2,5-diisocyanatomethylthiophene, 4-isocyanatoethylthio-2,6-dithia-1,8-octanediisocyanate, 1,2-diisothiocyanatoethane, and 1,6-diisothiocyanatohexane.

These may be used alone or two or more thereof may be used.

The compound represented by Formula (2) preferably includes at least one selected from the group consisting of bis(isocyanatomethyl)bicyclo[2.2.1]heptane, bis(isocyanatomethyl)cyclohexane, bis(isocyanatomethyl)benzene, tolylene diisocyanate, diphenylmethane diisocyanate, dicyclohexylmethane diisocyanate, hexamethylene diisocyanate, and pentamethylene diisocyanate (hereinafter referred to as a "preferred isocyanate compound").

Bis(isocyanatomethyl)bicyclo[2.2.1]heptane includes, for example, one or more selected from the group consisting of 2,5-bis(isocyanatomethyl)bicyclo[2.2.1]heptane and 2,6-bis(isocyanatomethyl)bicyclo[2.2.1]heptane, and is preferably a mixture of 2,5-bis(isocyanatomethyl)bicyclo[2.2.1]heptane and 2,6-bis(isocyanatomethyl)bicyclo[2.2.1]heptane.

Examples of bis(isocyanatomethyl)cyclohexane include 1,3-bis(isocyanatomethyl)cyclohexane and 1,4-bis(isocyanatomethyl)cyclohexane. Among these, 1,3-bis(isocyanatomethyl)cyclohexane is preferable.

Examples of bis(isocyanatomethyl)benzene include 1,3-bis(isocyanatomethyl)benzene and 1,4-bis(isocyanatomethyl)benzene. Among these, 1,3-bis(isocyanatomethyl)benzene is preferable.

Examples of tolylene diisocyanates include 2,4-tolylene diisocyanate and 2,6-tolylene diisocyanate. Among these, 2,4-tolylene diisocyanate is preferable.

Examples of diphenylmethane diisocyanates include 4,4'-diphenylmethane diisocyanate and 2,4'-diphenylmethane diisocyanate.

Examples of dicyclohexylmethane diisocyanates include dicyclohexylmethane-4,4'-diisocyanate.

In the compound represented by Formula (2), the content of the above "preferred isocyanate compound" is preferably 80 mass% or more, more preferably 90 mass% or more, and still more preferably 95 mass% or more and 100 mass% or less.

The content of the compound represented by Formula (1) with respect to 100 parts by mass of the compound represented by Formula (2) is preferably 0.01 to 10 parts by mass, more preferably 0.05 to 5 parts by mass, and still more preferably 0.1 to 3 parts by mass.

### [Polymerizable Composition]

The polymerizable composition according to the present embodiment contains the above isocyanate composition and an active hydrogen compound component.

### (Active Hydrogen Compound Component)

Examples of active hydrogen compound components include polythiol components, polyol components, and polyamine components.

### (Polythiol Component)

Examples of polythiol components include an ester compound of a polyol compound and a mercapto group-containing carboxylic acid compound, a linear or branched aliphatic polythiol compound, a polythiol compound having an aliphatic ring, and a polythiol compound having an aromatic ring.

In the ester compound of a polyol compound and a mercapto group-containing carboxylic acid compound, examples of polyol compounds include compounds containing two or more hydroxyl groups in the molecule. Here, examples of polyol compounds include ethylene glycol, diethylene glycol, propanediol, propanetriol, butanediol, trimethylolpropane, bis(2-hydroxyethyl)disulfide, pentaerythritol, and dipentaerythritol.

Examples of mercapto group-containing carboxylic acid compounds include thioglycolic acid, mercaptopropionic acid, a thiolactic acid compound, and thiosalicylic acid.

Examples of ester compounds of a polyol compound and a mercapto group-containing carboxylic acid compound include ethylene glycol bis(2-mercaptoacetate), ethylene glycol bis(3-mercaptopropionate), diethylene glycol bis(2-mercaptoacetate), diethylene glycol bis(3-mercaptopropionate), 1,4-butanediol bis(2-mercaptoacetate), 1,4-butanediol bis(3-mercaptopropionate), trimethylolpropane tris(2-mercaptoacetate), trimethylolpropane tris(3-mercaptopropionate), pentaerythritol tetrakis(2-mercaptoacetate), pentaerythritol tetrakis(3-mercaptopropionate), dipentaerythritol hexakis(2-mercaptoacetate), and dipentaerythritol hexakis(3-mercaptopropionate).

Examples of linear or branched aliphatic polythiol compounds include 1,2-ethanedithiol, 1,1-propanedithiol, 1,2-propanedithiol, 1,3-propanedithiol, 2,2-propanedithiol, 1,6-hexanedithiol, 1,2,3-propanetrithiol, 2,2-dimethylpropane-1,3-dithiol, 3,4-dimethyloxybutane-1,2-dithiol, 2,3-dimercapto-1-propanol, 1,2-dimercaptopropyl methyl ether, 2,3-dimercaptopropyl methyl ether, dimercaptoethyl ether, 2-(2-mercaptoethylthio)propane-1,3-dithiol, 2,2-bis(mercaptomethyl)-1,3-propanedithiol, bis(mercaptomethylthio)methane, tris(mercaptomethylthio)methane, bis(2-mercaptoethylthio)methane, 1,2-bis(mercaptomethylthio)ethane, 1,2-bis(2-mercaptoethylthio)ethane, 1,3-bis(mercaptomethylthio)propane, 1,3-bis(2-mercaptoethylthio)propane, 1,1,2,2-tetrakis(mercaptoethylthio)ethane, 1,1,3,3-tetrakis(mercaptoethylthio)propane, 3-mercaptomethyl-1,5-dimercapto-2,4-dithiapentane, tetrakis(mercaptoethylthio)propane, bis(2-mercaptoethyl)ether, bis(2-mercaptoethyl)sulfide, bis(2-mercaptoethyl)disulfide, 1,2-bis(2-mercaptoethylthio)-3-mercaptopropane, 4,7-bis(mercaptomethyl)-3,6,9-trithiaundecane-1,11-dithiol, 4,8-bis(mercaptomethyl)-3,6,9-trithiaundecane-1,11-dithiol, and 5,7-bis(mercaptomethyl)-3,6,9-trithiaundecane-1,11-dithiol.

Examples of polythiol compounds having an aliphatic ring include 1,1-cyclohexanedithiol, 1,2-cyclohexanedithiol, methylcyclohexanedithiol, bis(mercaptomethyl)cyclohexane, 2-(2,2-bis(mercaptomethylthio)ethyl)-1,3-dithiethane, 2,5-bis(mercaptomethyl)-1,4-dithiane, and 4,8-bis(mercaptomethyl)-1,3-dithiane.

Examples of polythiol compounds having an aromatic ring include 1,3-dimercaptobenzene, 1,4-dimercaptobenzene, 1,3-bis(mercaptomethyl)benzene, 1,4-bis(mercaptomethyl)benzene, 1,3-bis(mercaptoethyl)benzene, 1,4-bis(mercaptoethyl)benzene, 1,3,5-trimercaptobenzene, 1,3,5-tris(mercaptomethyl)benzene, 1,3,5-tris(mercaptoethyl)benzene, 4,4'-dimercaptobiphenyl, 4,4'-dimercaptobibenzyl, 2,5-toluenedithiol, 1,5-naphthalenedithiol, 2,6- naphthalenedithiol, 2,7-naphthalenedithiol, 2,4-dimethylbenzene-1,3-dithiol, 4,5-dimethylbenzene-1,3-dithiol, 9,10-anthracenedimethanethiol, 1,3-di(p-methyloxyphenyl)propane-2,2-dithiol, 1,3-diphenylpropane-2,2-dithiol, phenylmethane-1,1-dithiol, and 2,4-di(p-mercaptophenyl)pentane.

These may be used alone or two or more thereof may be used.

### (Polyol Component)

Examples of polyol components include ethylene glycol, diethylene glycol, propanediol, propanetriol, butanediol, trimethylolpropane, bis(2-hydroxyethyl)disulfide, pentaerythritol, and dipentaerythritol.

### (Polyamine Component)

Examples of polyamine components include polymethylenediamine, polyetherdiamine, diethylenetriamine, iminobispropylamine, bishexamethylenetriamine, diethylenetriamine, tetraethylenepentamine, pentaethylenehexaamine, pentaethylenehexaamine, dimethylaminopropylamine, aminoethylethanolamine, methyliminobispropylamine, methanediamine, N-aminomethylbiperazine, 1,3-diaminocyclohexane, isophoronediamine, meta-xylenediamine, tetrachloroparaxylylenediamine, metaphenylenediamine, 4,4'-methylenedianiline, diaminodiphenylsulfone, benzidine, diaminodiphenyl ether, 4,4'-thiodianiline, 4,4'-bis(o-toluidine)dianisidine, o-phenylenediamine, 2,4-toluenediamine, 2,5-toluenediamine, methylenebis(o-chloroaniline), diaminiditolylsulfone, bis(3,4-diaminophenyl)sulfone, 2,6-diaminopyridine, 4-chloro-o-phenylenediamine, 4-methoxy-6-methyl-m-phenylenediamine, m-aminobenzylamine, N,N,N',N'-tetramethyl-1,3-butanediamine, N,N,N',N'-tetramethyl-p-phenylenediamine, tetramethylguanidine, 2-dimethylamino-2-hydroxypropane, pyrazine, 2,4,6-tris(dimethylaminomethylol)phenol, N-methylpiperazine, N-β(aminoethyl)γ-aminopropyltrimethoxysilane, N-β(aminoethyl)γ-aminopropylmethyldimethoxysilane, and γ-aminopropylmethyldimethoxysilane.

The active hydrogen compound component preferably includes at least one selected from the group consisting of toluenediamine, pentaerythritol tetrakis(mercaptoacetate), pentaerythritol tetrakis(mercaptopropionate), trimethylolpropane tris(mercaptoacetate), trimethylolpropane tris(mercaptopropionate), bis(mercaptoethylthio)mercaptopropane, bis(mercaptomethyl)-3,6,9-trithiaundecanedithiol, dimercaptoethyl sulfide, bis(mercaptomethyl)dithiane, dimercaptoethyl ether and diethylene glycol.

Examples of toluenediamines include 2,4-toluenediamine and 2,5-toluenediamine.

Examples of pentaerythritol tetrakis(mercaptoacetate) include pentaerythritol tetrakis(2-mercaptoacetate).

Examples of pentaerythritol tetrakis(mercaptopropionate) include pentaerythritol tetrakis(3-mercaptopropionate).

Examples of trimethylolpropane tris(mercaptoacetate) include trimethylolpropane tris(2-mercaptoacetate).

Examples of trimethylolpropane tris(mercaptopropionate) include trimethylolpropane tris(3-mercaptopropionate).

Examples of bis(mercaptoethylthio)mercaptopropane include 1,2-bis(2-mercaptoethylthio)-3-mercaptopropane.

Examples of bis(mercaptomethyl)-3,6,9-trithiaundecanedithiol include 4,7-bis(mercaptomethyl)-3,6,9-trithiaundecane-1,11-dithiol, 4,8-bis(mercaptomethyl)-3,6,9-trithiaundecane-1,11-dithiol, 5,7-bis(mercaptomethyl)-3,6,9-trithiaundecane-1,11-dithiol. Bis(mercaptomethyl)-3,6,9-trithiaundecanedithiol is preferably a mixture of 4,7-bis(mercaptomethyl)-3,6,9-trithiaundecane-1,11-dithiol, 4,8-bis(mercaptomethyl)-3,6,9-trithiaundecane-1,11-dithiol, and 5,7-bis(mercaptomethyl)-3,6,9-trithiaundecane-1,11-dithiol.

The active hydrogen compound component is preferably a polythiol component.

The polythiol component
includes preferably at least one selected from the group consisting of 2,5-bis(mercaptomethyl)-1,4-dithiane, pentaerythritol tetrakis(2-mercaptoacetate), pentaerythritol tetrakis(3-mercaptopropionate), 4-mercaptomethyl-1,8-dimercapto-3,6-dithiaoctane, 4,7-bis(mercaptomethyl)-3,6,9-trithiaundecane-1,11-dithiol, 4,8-bis(mercaptomethyl)-3,6,9-trithiaundecane-1,11-dithiol, 5,7-bis(mercaptomethyl)-3,6,9-trithiaundecane-1,11-dithiol, trimethylolpropane tris(2-mercaptoacetate), trimethylolpropane tris(3-mercaptopropionate), butanediol bis(2-mercaptoacetate), butanediol bis(3-mercaptopropionate), dipentaerythritol hexakis(2-mercaptoacetate), and dipentaerythritol hexakis(3-mercaptopropionate);
more preferably at least one selected from the group consisting of 4,7-bis(mercaptomethyl)-3,6,9-trithiaundecane-1,11-dithiol, 4,8-bis(mercaptomethyl)-3,6,9-trithiaundecane-1,11-dithiol, 5,7-bis(mercaptomethyl)-3,6,9-trithiaundecane-1,11-dithiol, 4-mercaptomethyl-1,8-dimercapto-3,6-dithiaoctane, pentaerythritol tetrakis(3-mercaptopropionate), 2,5-bis(mercaptomethyl)-1,4-dithiane, and pentaerythritol tetrakis(2-mercaptoacetate);
still more preferably at least one selected from the group consisting of 4,7-bis(mercaptomethyl)-3,6,9-trithiaundecane-1,11-dithiol, 4,8-bis(mercaptomethyl)-3,6,9-trithiaundecane-1,11-dithiol, and 5,7-bis(mercaptomethyl)-3,6,9-trithiaundecane-1,11-dithiol; and
yet more preferably a mixture of 4,7-bis(mercaptomethyl)-3,6,9-trithiaundecane-1,11-dithiol, 4,8-bis(mercaptomethyl)-3,6,9-trithiaundecane-1,11-dithiol, and 5,7-bis(mercaptomethyl)-3,6,9-trithiaundecane-1,11-dithiol.

The amount of the above preferable polythiol component in the polythiol component is preferably 50 mass% or more, more preferably 70 mass% or more, still more preferably 90 mass% or more, and yet more preferably 95 mass% or more, and 100 mass% or less.

The equivalent ratio of mercapto groups of the polythiol component and isocyanato groups of the polyisocyanate component (mercapto group/isocyanato group) is preferably 40/60 or more, more preferably 43/57 or more, still more preferably 45/55 or more, and preferably 60/40 or less, more preferably 55/45 or less, and still more preferably 53/47 or less.

A total content of the polythiol component and the polyisocyanate component in the polymerizable composition is preferably 80 mass% or more, more preferably 90 mass% or more, still more preferably 95 mass% or more, and 100 mass% or less.

The polymerizable composition according to the present embodiment may contain other additives such as a UV absorbing agent, a coloring agent, an antioxidant, a coloring inhibitor, and a fluorescent brightening agent. These may be used alone or two or more thereof may be used.

### [Resin]

The resin according to the present embodiment is a cured product of the above polymerizable composition. The cured product is obtained by polymerizing the polymerizable composition.

The polymerization is preferably a cast polymerization method. For example, the lens substrate can be obtained by injecting a polymerizable composition into a mold in which a glass or metal mold and a tape or a gasket are combined and performing polymerization.

### [Method of Producing Resin]

A method of producing a resin according to the present embodiment includes
a step of mixing an isocyanate component containing a compound represented by Formula (2):

OCN-R¹-NCO (2)

(in the formula,
R¹ is
a linear alkylene group having 1 to 20 carbon atoms or
a group represented by Formula (a-1), Formula (a-2), Formula (a-3), Formula (a-4) or Formula (a-5): 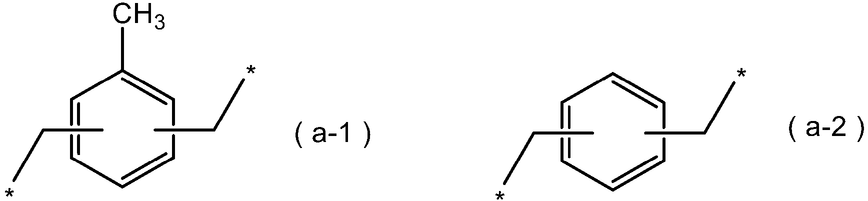 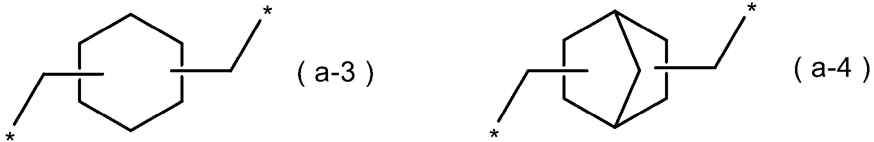 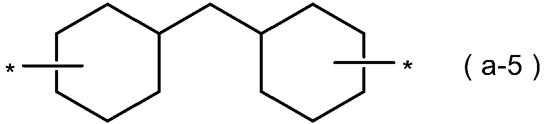
(in the formula, * is a binding site)), and a compound represented by Formula (3): 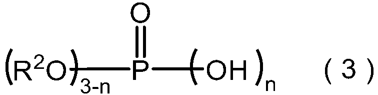
(in the formula,
R²'s are each independently an aliphatic hydrocarbon group having 1 to 12 carbon atoms or an aromatic hydrocarbon group having 6 to 20 carbon atoms in which some methylene moieties are optionally substituted with an oxygen atom, and
n is 1 or 2)
at a temperature of 0°C to 10°C,
a step of mixing the mixture obtained in the mixing step with an active hydrogen component while maintaining the temperature at 0°C to 10°C to obtain a polymerizable composition, and
a step of polymerizing the polymerizable composition.

In the mixing step, when the isocyanate component containing the compound represented by Formula (2) and the compound represented by Formula (3) are mixed at a temperature of 0°C to 10°C, Compound 1 is obtained. In the mixing step, it is preferable to mix only the isocyanate component containing the compound represented by Formula (2) and the compound represented by Formula (3), and when only the isocyanate component and the compound represented by Formula (3) are mixed in this manner, and the mixture is left under conditions in which other compounds such as a polymerization catalyst are not present, these compounds react to obtain Compound 1.

The mixture obtained in the mixing step is mixed with an active hydrogen component while maintaining the temperature at 0°C to 10°C to obtain a polymerizable composition.

In the step of polymerizing the polymerizable composition, polymerization conditions can be appropriately set according to the polymerizable composition. The polymerization start temperature is preferably 0°C or higher, more preferably 10°C or higher, and preferably 50°C or lower, and more preferably 40°C or lower. Preferably, the temperature is raised from the polymerization start temperature, and curing by heating is then performed. For example, the maximum heating temperature is usually 110°C or higher and 130°C or lower.

After polymerization is completed, the lens substrate may be released from the mold and subjected to an annealing treatment. The temperature in the annealing treatment is preferably 100 to 150°C.

The resin is used, for example, as an optical material. The optical material includes the above resin. The resin is preferably used as a spectacle lens among optical materials.

### [Spectacle Lens]

The spectacle lens according to the present embodiment includes, for example, a lens substrate containing the resin according to the present embodiment. The spectacle lens according to the present embodiment may include at least one layer selected from the group consisting of a hard coat layer, a foundation layer, and an antireflection layer.

Fig. 1 is a schematic cross-sectional view of a spectacle lens 1 according to the present embodiment. The spectacle lens 1 according to the present embodiment includes a lens substrate 11, a hard coat layer 21f provided on the side of an object-side surface 11a of the lens substrate 11, a functional layer 31f provided on the side of an object-side surface 21fa of the hard coat layer 21f, and a water-repellent layer 41f provided on the side of an object-side surface 31fa of the functional layer 31f.

In addition, when the lens substrate 11 is a finished lens, the spectacle lens 1 according to the present embodiment further includes a hard coat layer 21b provided on the side of an eyeball-side surface 11b of the lens substrate 11, a functional layer 31b provided on the side of an eyeball-side surface 21bb of the hard coat layer 21b, and a water-repellent layer 41b provided on the side of an eyeball-side surface 31bb of the functional layer 31b.

Here, although not shown, a foundation layer may be provided between the lens substrate 11 and the hard coat layer 21f or between the lens substrate 11 and the hard coat layer 21b.

### <Lens Substrate>

The lens substrate may contain the resin according to the present embodiment.

The surface shape of the lens substrate is not particularly limited, and may be flat, convex, concave or the like.

The lens substrate may be used for any application such as a single focal lens, a multifocal lens, and a progressive power lens. For example, as one example, for a progressive power lens, usually, a near portion region (near portion) and a progressive portion region (intermediate region) are included in the above lower region, and a distance portion region (distance portion) is included in an upper region.

As the lens substrate, a colorless lens substrate is usually used, but a lens substrate that is colored in a range in which the transparency is not impaired can also be used.

The lens substrate is preferably of a meniscus type. A "meniscus type" lens substrate means a lens substrate having a curved surface formed on both sides. When the meniscus type lens substrate contains the above Compound 1, it is possible to reduce astigmatism.

The optical center thickness of the lens substrate is not particularly limited, and is preferably 0.5 mm or more and 10.0 mm or less, more preferably 0.5 mm or more and 5.0 mm or less, still more preferably 0.5 mm or more and 3.0 mm or less, and yet more preferably 0.5 mm or more and 2.0 mm or less.

The diameter of the lens substrate is not particularly limited, and is usually about 50 to 100 mm.

The refractive index ne of the lens substrate is preferably 1.52 or more, more preferably 1.53 or more, still more preferably 1.55 or more, yet more preferably 1.58 or more, and even more preferably 1.60 or more.

In order to enhance an effect of improving the Abbe number according to the inclusion of Compound 1, the refractive index ne of the lens substrate is preferably 1.70 or more, and more preferably 1.74 or more.

Here, although the upper limit of the refractive index ne of the lens substrate is not particularly limited, it may be, for example 1.80 or less.

### [Method of Producing Lens Substrate]

Although not particularly limited, the lens substrate is obtained by, for example, a production method including
a step of curing the above polymerizable composition and
a step of annealing a cured resin.

The polymerization is preferably a cast polymerization method. For example, the lens substrate can be obtained by injecting a polymerizable composition into a mold in which a glass or metal mold and a tape or a gasket are combined and performing polymerization.

Polymerization conditions can be appropriately set according to the polymerizable composition. The polymerization start temperature is preferably 0°C or higher, more preferably 10°C or higher, and preferably 50°C or lower, and more preferably 40°C or lower. Preferably, the temperature is raised from the polymerization start temperature, and curing by heating is then performed. For example, the maximum heating temperature is usually 110°C or higher and 130°C or lower.

After polymerization is completed, the lens substrate may be released from the mold and subjected to an annealing treatment. The temperature in the annealing treatment is preferably 100 to 150°C.

### <Hard Coat Layer>

The hard coat layer is, for example, a cured film formed of a curable composition containing an inorganic oxide and a silicon compound. The curable composition preferably further contains a polyfunctional epoxy compound.

Examples of inorganic oxides include silicon oxide, aluminum oxide, titanium oxide, zirconium oxide, tungsten oxide, zinc oxide, tin oxide, beryllium oxide, antimony oxide, and composite oxides formed of two or more of these inorganic oxides. These may be used alone or two or more thereof may be used in combination. Among these inorganic oxides, silicon oxide is preferable. Here, colloidal silica may be used as the inorganic oxide.

The content of the inorganic oxide in the solid content of the curable composition is preferably 20 mass% or more and 80 mass% or less, more preferably 25 mass% or more and 70 mass% or less, and still more preferably 25 mass% or more and 50 mass% or less.

The silicon compound is, for example, a silicon compound having a hydrolyzable group such as an alkoxy group. The silicon compound is preferably a silane coupling agent containing an organic group and a hydrolyzable group bonded to silicon atoms. The organic group bonded to silicon atoms is preferably an organic group having a functional group, for example, an epoxy group such as a glycidoxy group, a vinyl group, a methacryloxy group, an acryloxy group, a mercapto group, an amino group, and a phenyl group, and more preferably an organic group having an epoxy group. Here, the silicon compound may have an alkyl group bonded to silicon.

Examples of commercial products of the above silane coupling agents include KBM-303, KBM-402, KBM-403, KBE-402, KBE-403, KBM-1403, KBM-502, KBM-503, KBE-502, KBE-503, KBM-5103, KBM-602, KBM-603, KBM-903, KBE-903, KBE-9103, KBM-573, KBM-575, KBM-9659, KBE-585, KBM-802, KBM-803, KBE-846, and KBE-9007 (product name, commercially available from Shin-Etsu Chemical Co., Ltd.).

The content of the silicon compound in the solid content of the curable composition is preferably 20 mass% or more and 90 mass% or less, more preferably 30 mass% or more and 75 mass% or less, and still more preferably 50 mass% or more and 75 mass% or less.

The polyfunctional epoxy compound is a polyfunctional epoxy compound containing two or more epoxy groups in one molecule, and more preferably a polyfunctional epoxy compound containing two or three epoxy groups in one molecule. Examples of commercial products of polyfunctional epoxy compounds include "Denacol" series EX-201, EX-211, EX-212, EX-252, EX-313, EX-314, EX-321, EX-411, EX-421, EX-512, EX-521, EX-611, EX-612, EX-614, and EX-614B (product name, commercially available from Nagase ChemteX Corporation).

The content of the polyfunctional epoxy compound in the solid content of the curable composition is preferably 0 mass% or more and 50 mass% or less, more preferably 10 mass% or more and 40 mass% or less, and still more preferably 15 mass% or more and 30 mass% or less.

The above curable composition can be prepared by mixing optional components such as an organic solvent, a leveling agent, and a curing catalyst as necessary in addition to the components described above.

The above hard coat layer can be formed by applying a curable composition to the substrate and performing a curing treatment (thermal curing, photocuring, etc.). As a method of applying a curable composition, commonly used methods such as a dipping method, a spin coating method, and a spray method can be applied. The curing treatment is usually performed by performing heating on a curable composition containing a polyfunctional epoxy compound. For example, the heat curing treatment can be performed by disposing the lens coated with the above curable composition under an environment of an atmospheric temperature of 50 to 150°C for about 30 minutes to 3 hours.

### <Foundation Layer>

For example, the above foundation layer can be formed from an aqueous resin composition containing at least one resin particle selected from the group consisting of a polyurethane resin, an acrylic resin, and an epoxy resin.

As the above aqueous resin composition, a commercially available aqueous polyurethane can be used without change or one that is diluted with an aqueous solvent as necessary can be used. Examples of commercially available aqueous polyurethanes include "Evafanol" series (product name, commercially available from Nicca Chemical Co., Ltd.), "SuperFlex" series (product name, commercially available from DKS Co., Ltd.), "Adeka Bontighter" series (product name, commercially available from ADEKA Corporation), "Olester" series (product name, commercially available from Mitsui Chemicals Inc), "Bondic" series and "Hydran" series (product name, commercially available from Dainippon Ink and Chemicals, Inc.), "Impranil" series (product name, commercially available from Bayer AG), "Soflanate" series (product name, commercially available from Japan Soflan Co., Ltd.), "Poiz" series (product name, commercially available from Kao Corporation), "Sanprene" series (product name, commercially available from Sanyo Chemical Industries, Ltd.), "Aizerax" series (product name, commercially available from Hodogaya Chemical Co., Ltd.), and "NeoRez" series (product name, commercially available from AstraZeneca).

The foundation layer can be formed, for example, by applying the above aqueous resin composition to the surface of the substrate and drying it.

### <Functional Layer>

Examples of the above functional layers include an antireflection layer, an ultraviolet light absorbing layer, an infrared light absorbing layer, a photochromic layer, an antistatic layer, and an anti-fogging layer. These functional layers may be used alone or two or more thereof may be used in combination. For these functional layers, known techniques related to spectacle lenses can be applied. Among these, it is preferable to have an antireflection layer.

### (Antireflection Layer)

For example, the antireflection layer has low refractive index layers and high refractive index layers that are alternately arranged. The number of layers that the antireflection layer has is preferably 4 to 11 and more preferably 5 to 8.

The refractive index of the low refractive index layer is preferably 1.35 to 1.80 and more preferably 1.45 to 1.50 at a wavelength of 500 to 550 nm. The low refractive index layer is formed of an inorganic oxide and preferably formed of silicon oxide.

The refractive index of the high refractive index layer is preferably 1.90 to 2.60 and more preferably 2.00 to 2.40 at a wavelength of 500 to 550 nm. The high refractive index layer is formed of, for example, an inorganic oxide. The inorganic oxide used for the high refractive index layer is preferably at least one selected from the group consisting of zirconium oxide, tantalum oxide, yttrium oxide, titanium oxide, niobium oxide and aluminum oxide, and more preferably at least one selected from the group consisting of zirconium oxide and tantalum oxide.

For the antireflection layer, low refractive index layers and high refractive index layers can be alternately laminated by a vacuum deposition method to form an antireflection layer.

### <Water-repellent Layer>

The water-repellent layer is formed using a water-repellent material composition to be described below. The water-repellent layer may be formed on the hard coat layer or formed on the functional layer, but is preferably formed on the antireflection layer. Moreover, the water-repellent layer is preferably positioned on the outermost surface.

### [Examples]

Hereinafter, the present embodiment will be described in more detail with reference to examples and comparative examples. Here, the present invention is not limited to the following examples.

### <Example 1>

In a thermostatic chamber set at a temperature of 5°C, 0.25 parts by mass of 1,3-bis(isocyanatomethyl)benzene and 1.00 part by mass of an acidic phosphate ester containing (CH₃CH₂CH₂CH₂OCH₂CH2_{O})₂P(O)OH and CH₃CH₂CH₂CH₂OCH₂CH2_{O}P(O)(OH)₂ were added to a container and mixed. The obtained sample was analyzed by ¹H-NMR, ¹³C-NMR, and ³¹P-NMR, and it was confirmed that P(O)-C(O)-NH- bonds of the compound represented by Formula (1-1) and the compound represented by Formula (1-2) were formed (¹H-NMR:9.3-10.5 ppm (br, N-H),¹³C-NMR:43 ppm (N-CH₂-Ph,2H), 31P-NMR:-11.50 ppm,11.80 ppm ((-CH₂CH₂O)₂-P(0)-O-C(O)NH),-CH₂CH₂O-P(0)-(O-C(O)NH-)₂)).

### <Example 2>

In a thermostatic chamber set at a temperature of 5°C, 0.25 parts by mass of a mixture containing 2,5-bis(isocyanatomethyl)bicyclo[2.2.1]heptane and 2,6-bis(isocyanatomethyl)bicyclo[2.2.1]heptane and 1.00 part by mass of an acidic phosphate ester containing (CH₃CH₂CH₂CH₂OCH₂CH2_{O})₂P(O)OH and CH₃CH₂CH₂CH₂OCH₂CH2_{O}P(O)(OH)₂ were added to a container and mixed. The obtained sample was analyzed by ¹H-NMR, ¹³C-NMR, and ³¹P-NMR, and it was confirmed that P(O)-C(O)-NH- bonds of the compound represented by Formula (1-7) and the compound represented by Formula (1-8) were formed.

### <Example 3>

In a thermostatic chamber set at a temperature of 5°C, 0.25 parts by mass of dicyclohexylmethane-4,4'-diisocyanate and 1.00 part by mass of an acidic phosphate ester containing (CH₃CH₂CH₂CH₂OCH₂CH2ₒ)₂P(O)OH and CH₃CH₂CH₂CH₂OCH₂CH2ₒP(O)(OH)₂ were added to a container and mixed. The obtained sample was analyzed by ¹H-NMR, ¹³C-NMR, and ³¹P-NMR, and it was confirmed that P(O)-C(O)-NH- bonds of the compound represented by Formula (1-9) and the compound represented by Formula (1-10) were formed.

### <Example 4>

In a thermostatic chamber set at a temperature of 5°C, 1.69 parts by mass of 1,3-bis(isocyanatomethyl)benzene and 0.15 parts by mass of an acidic phosphate ester containing (CH₃CH₂CH₂CH₂OCH₂CH2ₒ)₂P(O)OH and CH₃CH₂CH₂CH₂OCH₂CH2ₒP(O)(OH)₂ as a mold release agent were mixed and dissolved in a container.

A reaction container was placed in a thermostatic chamber set at a temperature of 5°C, the obtained mixture and 1,3-bis(isocyanatomethyl)benzene were put into the reaction container and stirred and mixed so that the total amount was 50.60 parts by mass. In addition, 0.06 parts by mass of dimethyltin dichloride as a catalyst and 0.55 parts by mass of a UV absorbing agent "SEESORB 701" (product name, commercially available from Shipro Kasei Kaisha, Ltd.) were put into the reaction container and stirred and mixed. Then, 49.40 parts by mass of a mixture of 4,7-bis(mercaptomethyl)-3,6,9-trithiaundecane-1,11-dithiol, 4,8-bis(mercaptomethyl)-3,6,9-trithiaundecane-1,11-dithiol, and 5,7-bis(mercaptomethyl)-3,6,9-trithiaundecane-1,11-dithiol was additionally added, and the mixture was stirred and mixed under a reduced pressure of 10 mmHg for 30 minutes to prepare a curable composition. Next, this curable composition was injected into a lens molding mold composed of a glass mold and a resin gasket prepared in advance (0.00D, the wall thickness was set to 1.6 mm) and polymerized in an electric furnace at 20°C to 120°C for 24 hours. After the polymerization was completed, the gasket and the mold were removed without any issues related to mold release. After the mold was released, a heat treatment was performed at 120°C for 2 hours to obtain a lens substrate.

### <Example 5>

In a thermostatic chamber set at a temperature of 5°C, 1.68 parts by mass of a mixture containing bis(isocyanatomethyl)-bicyclo[2.2.1]heptane and 2,6-bis(isocyanatomethyl)-bicyclo[2.2.1]heptane and 0.15 parts by mass of an acidic phosphate ester containing (CH₃CH₂CH₂CH₂OCH₂CH2_{O})₂P(O)OH and CH₃CH₂CH₂CH₂OCH₂CH2_{O}P(O)(OH)₂ as a mold release agent were mixed and dissolved in a container.

A reaction container was placed in a thermostatic chamber set at a temperature of 5°C, the obtained mixture and a mixture of 2,5-bis(isocyanatomethyl)-bicyclo[2.2.1]heptane and 2,6-bis(isocyanatomethyl)-bicyclo[2.2.1]heptane were put into the reaction container and stirred and mixed so that the total amount was 50.28 parts by mass. 0.06 parts by mass of dimethyltin dichloride as a catalyst and 0.55 parts by mass of a UV absorbing agent "SEESORB 701" (product name, commercially available from Shipro Kasei Kaisha, Ltd.) were additionally put into the reaction container and stirred and mixed. Then, 25.50 parts by mass of pentaerythritol tetrakis(3-mercaptopropionate), and 24.22 parts by mass of 1,2-bis(2-mercaptoethylthio)-3-mercaptopropane were additionally added, and the mixture was stirred and mixed under a reduced pressure of 10 mmHg for 30 minutes to prepare a curable composition. Next, this curable composition was injected into a lens molding mold composed of a glass mold and a resin gasket prepared in advance (0.00D, the wall thickness was set to 1.6 mm) and polymerized in an electric furnace at 20°C to 120°C for 24 hours. After the polymerization was completed, the gasket and the mold were removed without any issues related to mold release. After the mold was released, a heat treatment was performed at 120°C for 2 hours to obtain a lens substrate.

## Claims

1. A compound represented by Formula (1): 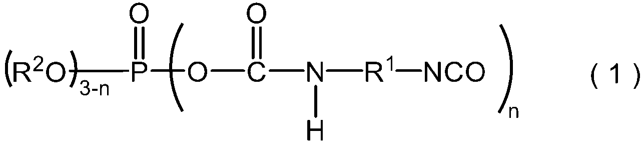 (in the formula,
R¹ is
a linear alkylene group having 1 to 20 carbon atoms or
a group represented by Formula (a-1), Formula (a-2), Formula (a-3), Formula (a-4) or Formula (a-5): 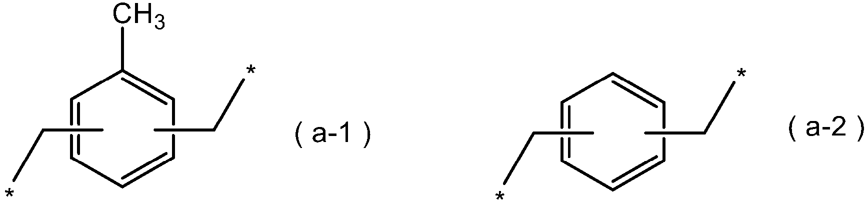 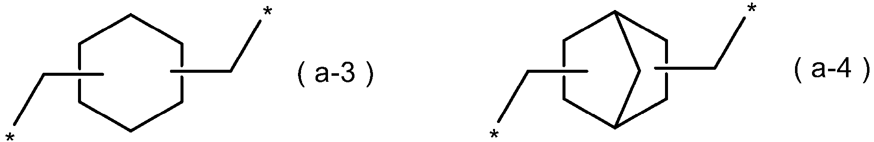 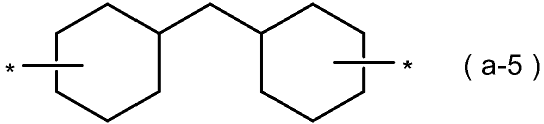
(in the formula, * is a binding site),
R²'s are each independently an aliphatic hydrocarbon group having 1 to 12 carbon atoms or an aromatic hydrocarbon group having 6 to 20 carbon atoms in which some methylene moieties are optionally substituted with an oxygen atom, and
n is 1 or 2).

2. A mold release agent comprising the compound according to claim 1.

3. Use of the compound according to claim 1 as a mold release agent.

4. An isocyanate composition comprising a compound represented by Formula (1): 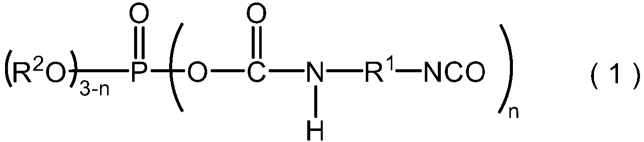 (in the formula,
R¹ is
a linear alkylene group having 1 to 20 carbon atoms or
a group represented by Formula (a-1), Formula (a-2), Formula (a-3), Formula (a-4) or Formula (a-5): 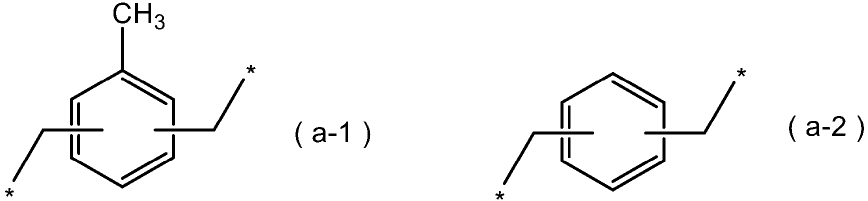 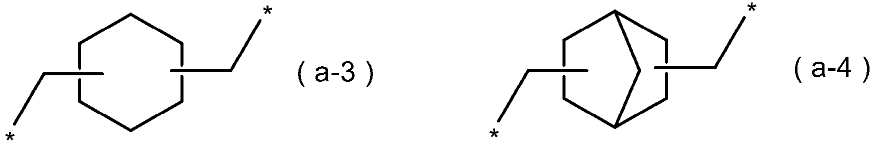 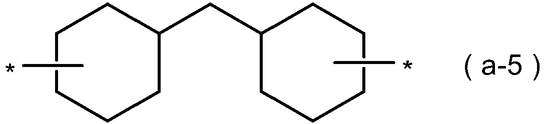
(in the formula, * is a binding site),
R²'s are each independently an aliphatic hydrocarbon group having 1 to 12 carbon atoms or an aromatic hydrocarbon group having 6 to 20 carbon atoms in which some methylene moieties are optionally substituted with an oxygen atom, and
n is 1 or 2), and
an isocyanate component containing a compound represented by Formula (2):
OCN-R¹-NCO (2)
(in the formula,
R¹ is
a linear alkylene group having 1 to 20 carbon atoms or
a group represented by Formula (a-1), Formula (a-2), Formula (a-3), Formula (a-4) or Formula (a-5): 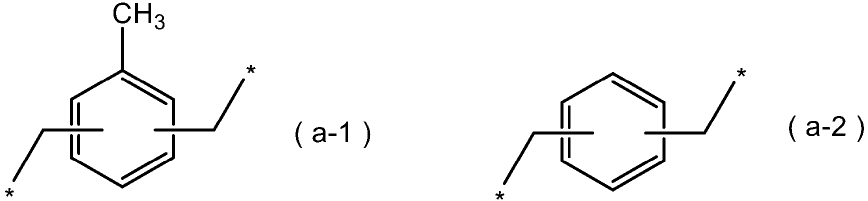 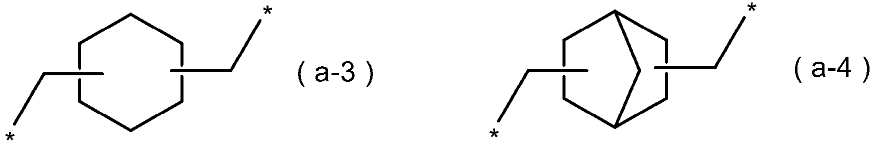 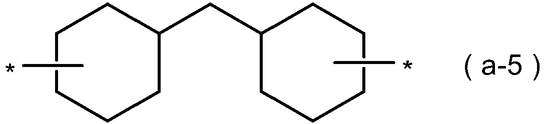
(in the formula, * is a binding site).

5. The isocyanate composition according to claim 4,
wherein, in the compound represented by Formula (1) and the compound represented by Formula (2), R¹'s are the same group.

6. The isocyanate composition according to claim 4,
wherein the content of the compound represented by Formula (1) with respect to 100 parts by mass of the compound represented by Formula (2) is 0.01 to 10 parts by mass.

7. A polymerizable composition comprising:
the isocyanate composition according to claim 4 or 5; and
an active hydrogen compound component.

8. A resin which is a cured product of the polymerizable composition according to claim 7.

9. An optical material comprising the resin according to claim 8.

10. A spectacle lens comprising the resin according to claim 9.

11. A method of producing a resin, comprising:
a step of mixing an isocyanate component containing a compound represented by Formula (2):
OCN-R¹-NCO (2)
(in the formula,
R¹ is
a linear alkylene group having 1 to 20 carbon atoms or
a group represented by Formula (a-1), Formula (a-2), Formula (a-3), Formula (a-4) or Formula (a-5): 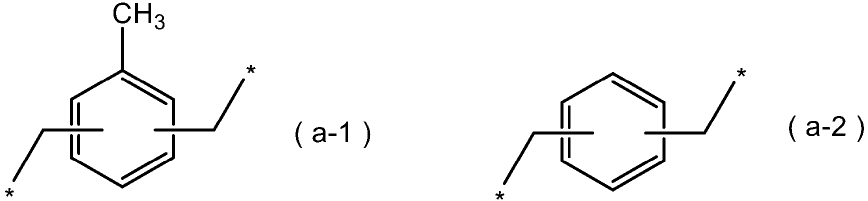 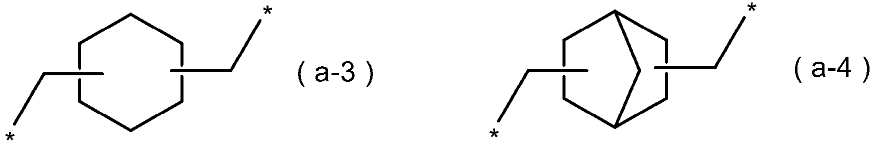 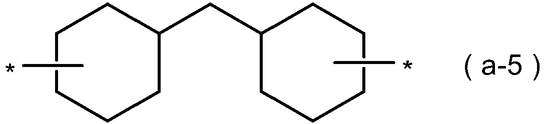
(in the formula, * is a binding site)), and
a compound represented by Formula (3): 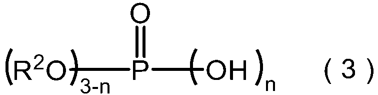
(in the formula,
R²'s are each independently an aliphatic hydrocarbon group having 1 to 12 carbon atoms or an aromatic hydrocarbon group having 6 to 20 carbon atoms in which some methylene moieties are optionally substituted with an oxygen atom, and
n is 1 or 2),
at a temperature of 0°C to 10°C;
a step of mixing the mixture obtained in the mixing step with an active hydrogen component while maintaining the temperature at 0°C to 10°C to obtain a polymerizable composition; and
a step of polymerizing the polymerizable composition.

12. A method of producing a spectacle lens, comprising:
a step of mixing an isocyanate component containing a compound represented by Formula (2):
OCN-R¹-NCO (2)
(in the formula,
R¹ is
a linear alkylene group having 1 to 20 carbon atoms or
a group represented by Formula (a-1), Formula (a-2), Formula (a-3), Formula (a-4) or Formula (a-5): 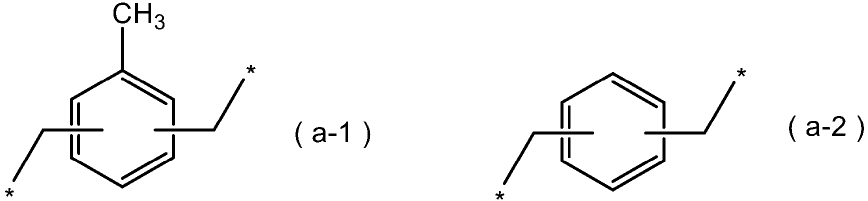 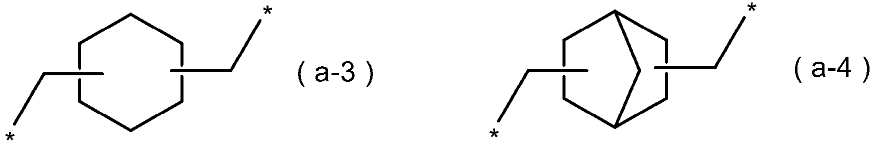 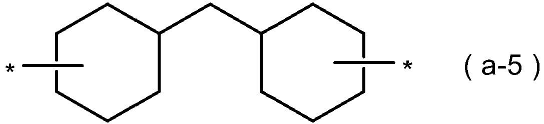
(in the formula, * is a binding site)), and
a compound represented by Formula (3): 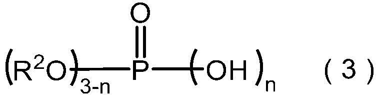
(in the formula,
R²'s are each independently an aliphatic hydrocarbon group having 1 to 12 carbon atoms or an aromatic hydrocarbon group having 6 to 20 carbon atoms in which some methylene moieties are optionally substituted with an oxygen atom, and
n is 1 or 2)
at a temperature of 0°C to 10°C;
a step of mixing the mixture obtained in the mixing step with an active hydrogen component while maintaining the temperature at 0°C to 10°C to obtain a polymerizable composition; and
a step of polymerizing the polymerizable composition,
wherein the polymerization step is performed by filling a molding die with the polymerizable composition.
